# EUROPEAN PATENT APPLICATION

(11) **EP 1 898 414 A1**
(43) Date of publication of application: **12.03.2008**
(21) Application number: 07017604.5
(22) Date of filing: 07.09.2007
(51) Int. Cl.: G11B 27/031, G11B 27/30, G11B 27/34, G11B 27/36, H04N 5/00

(54) **Method and apparatus for processing digital program segments**

(30) Priority: 07.09.2006 US 470680
(71) Applicant: HARRIS CORPORATION, Melbourne, Florida 32919 (US)
(72) Inventor: Deschamp, Joseph, Schwenkville, PA 19473 (US); Guerrero, David R., Center Valley, PA 18034 (US); Richardson, Michael L., Reading, PA 18034 (US); Zwiebel, Robert C., Coopersburg, PA 18036 (US)
(74) Representative: Schmidt, Steffen J.

(57) **Abstract**

A digital processor in a network ingests encoded media programs and determines conformance with variable test criteria. A storage medium or a network provides the media data as files or as streamed data. Various coding and compression formats can be served at the input or output. A scalable hierarchy of control, media analyst, and user interactive test and display processors share the processing load of decoding, processing and re-encoding media programs or segments for storage and distribution. Processing can include chroma, luma, audio level and other controls, normalizing successive segments to standards, forcing legal variable values, and marking of segments and data changes for optional user review and control using a graphic interface. The interface can display the program image and audio, multiple user selected graphic displays, tabular information including processing criteria and includes the status and queuing of segments that are in process or ready for distribution.

## Description

The invention concerns a data processing system configured for organized processing of multiple audio and video media data segments, using both robotic and interactive processes for analyzing and amending media segment data, and/or marking portions of the data for review. The system processes data off-line in the form of stored data files, in less time than the corresponding programs might be played back. Files containing one or more program segments that may differ in their compression and coding schemes, are decoded, analyzed and optionally amended in decoded form and re-encoded in the same or a different coding scheme, with embedded metadata identifying the amendments made and/or the results of the analysis.

A graphical interface enables an operator to adjust processing criteria, and includes test equipment displays for assisting in review of changing audio and video parameter values. The legality of data variable values can be checked and corrected in multiple ways, or arbitrarily changed according to if/then rules. Legalizing options include detecting and correcting conditions involving combinations of variables, such as color gamut errors that arise when changing between variable color encoding variable sets. The invention operates on ingested segments in a queue and serves up the menu of segments available for use or distribution when processing is complete.

The invention is particularly useful to process segments in preparation for preliminary processing and adaptation for distribution of multiple programs or program segments, for example in cable, broadcast, network data streaming and similar operations.

In a video production or distribution setting, such as a television newsroom for example, it is useful to have a variety of program segments ready and waiting to be selected for playback. In some scenarios, it is possible to plan out which prerecorded segments or portions thereof are to be run for a preplanned time interval, interleaved with one another in some order, and perhaps also including time segments that are to be used for live signal feeds. The program segments needs to be reviewed and approved, potentially passed or failed or abridged based on criteria related to content and quality. A good deal of preliminary preparation, planning and processing may be required to prepare the segments for use.

Although a newsroom is a particularly demanding example, there are various other environments that have a similar need to preliminarily review and perhaps to adjust the encoding of digital program data. Segments are streamed from Internet sources, downloaded and played on demand or otherwise selected via cable and satellite television, played in pay-per-view movie program distribution systems, etc. In some such distribution settings, such as Internet streaming of news segments selected by remote users, the content provider may not be concerned with content transitions from one segment to another, because the remote users are making selections. It is still advantageous preliminarily to review and approve program segments before offering them for distribution. For example, the video color encoding and also the audio may need to be adjusted for levels, balance and relative phase, to maintain a high quality in the program data and to relieve the user from the need to make repeated adjustments at the point of playback.

In short, programming preferably should meet technical specifications, and program segments considered for distribution need to be checked, and often adjusted to conform to specifications. It would be advantageous if this could be handled quickly and efficiently, without sacrificing technical analysis capabilities, and while preserving the potential for a human user or editor also to plan sequences and transitions in content.

When encoding or recording video program segments, the signals can be filtered and passed through level controls and legalizers, when occurring or being played back for re-recording, at normal speed. Normal speed playback takes time, and media data might advantageously be prepared and approved in less time than it would take to play back the program. It is possible to envision level controls that operate at greater than playback speed, but fast playback makes human monitoring more difficult. Digital data samples are sometimes in compressed form such as with MPEG and other grouped picture compression techniques, are stored and transmitted at less than their playing time in files of numeric data that are not in a form of successive time samples. Some other technique is needed to review and approve such segments, preferably with the ability to apply sophisticated analyses, the ability to enable human review and monitoring, and without producing a processing bottleneck.

Test equipment is known for audio and video parameter measurement, including digital video in RGB color component samples, or composite luminance and color difference sampling YCbCr or YUV, etc., and including multiple audio channels, and embedded data for closed captioning, control, time base and other uses. Typically, before one can process the program segments, the program is decoded from any compressed or encrypted state, and played back, usually substantially at a real time playback rate or slower. Once decoded, a video processing amplifier and audio mixer can be used to vary the chroma phase, adjust various video levels, vary the audio volume or apply automatic gain control, etc.

Video test equipment is useful for monitoring signal levels, and can be used in conjunction with controls to adjust various levels and timing relationships, with the object being to maintain subjectively or objectively defined signal conditions over time. Test and adjustment equipment is typically used when a program is recorded or played back or broadcast. At these times, the signal is proceeding at its normal playing rate ("real time"). During real time recording or playback, the operator may employ automatic gain controls and the like, but also can monitor signal levels. If the operator determines an adjustment should be made as conditions change, such as a luminance level or an audio volume, the adjustment can be accomplished reasonably promptly.

In preparing a number of program segments for broadcast or streaming or other forms of transmission or distribution, it would be advantageous to provide a way to determine the signals levels and excursions, and generally to determine whether the data values comply with some set of specifications, without spending the time to play back the program after decoding. The program data may be compressed and require decompression before signal levels can be monitored for adjustment either by robotic or human control. Compression techniques differ, making it a complicated matter to apply a level analysis process without decoding. Different programs may have different standards of sampling and acceptable average signal levels. The same program content might need to be reformatted several times, for example to accommodate either of a low resolution low bandwidth signal path or a higher resolution higher bandwidth application.

Decompression, decoding, signal processing for converting between standard and high definition, re-sampling for a different aspect ratio and other video processing steps may be involved to accommodate a particular program distribution need. These steps involve various transformations, to and from diverse data formatting states. One example is a change between composite and color component video encoding, using a well defined algebraic conversion. The conversion, however, can introduce new errors because three legal variable values in one color space sometimes map to a set of three variables in another color space wherein one of the variables is out of its legal range (a color gamut error).

If a distribution center is distributing a number of programs concurrently, it is not possible to play back and re-record or re-mix the programs at the same time, to make such adjustments or corrections. Thus there are technical challenges to put all the programs or program segments into a comparable format in which they can be meaningfully analyzed and adjusted. There is a substantial bottleneck with respect to available time and processing capacity.

Due to the time needed to perceive and react to an undesirable signal level, a human operator is typically more capable of monitoring and making adjustments effectively when re-recording a program at slower than its nominal or real-time playback rate. Unfortunately, slow motion playback requires even more time than monitoring at nominal playback speed. One might try to decode and monitor (and make adjustments) when re-recording a program at faster than its real time rate. But due to progress of program time at faster than a real time rate, the operator realizes and reacts to the need for adjustment over a longer effective time when considered at the real time playback rate. A viewer of the adjusted signal when later played back at the real time rate may perceive that adjustment was needed earlier than the operator was able to realize and make the adjustments at the faster than real time rate.

Some adjustments to a signal may be more or less robotic and automated, versus interactive and guided by an operator who monitors and adjusts the signal as the program elapses. A robotic adjustment needs to be based simply on levels and timing, i.e., on objective readily measured aspects that are monitored, typically instantaneous levels, peaks and averages integrated over a predetermined time. An operator might be guided by objective aspects when making adjustments too, but additionally can make adjustments for subjective reasons of content or artistic choice, based on parameters that are not readily measured.

A multi-format monitor is a useful tool for an operator to monitor a program and also to keep track of graphic displays such as polar vectorscope plots, plots of composite level versus horizontal scan time, timing between the color burst reference and the phase of the horizontal sync, etc. An exemplary monitor is the Harris Corporation - Videotek VTM series, an embodiment of which is disclosed in US Pat. 6,532,024 - Everett et al. These monitors selectably provide in one formatted display area, a view of the picture and also graphic and numeric plots of various video and audio parameters as the program is recorded or played back. In some embodiments, the VTM monitors can freeze frames or focus on selected zones in the picture field, including areas centered on pixels that meet user selected criteria. Such features assist the operator in making necessary adjustments. Such a monitor can be used together with an analog and/or digital video processing amplifier (a video "proc amp") that enables ongoing manual adjustment of video parameters.

The recent embodiments of multi-format VTM monitors generate the displayed and plotted information from digital video in high definition or standard definition. The monitors can be elements of video production facilities with additional systems. Alternatively or additionally, digitizing stages and conversion stages can enable video input to be provided in various numeric pixel definition formats. US Pat. 6,828,981 - Richardson teaches a display device that is sensitive to numeric problems associated with making adjustments and also converting between formats. In particular when making adjustments and converting back and forth between a color component video encoding color space definition (e.g., RGB) and a luminance and color difference composite definition (e.g., YCbCr), it is possible to have a pixel color definition that is legal in one color space definition, but when converted to the other color space provides illegal levels for one or another of the variables. Pixel color definitions with illegal values are known as gamut errors. The Richardson '981 patent teaches triggering an alarm and highlighting gamut errors in polar displays used in VTM monitors. This capability can be used with a color data "legalizer," also available in the Harris Corporation - Videotek line, to substitute legal values for values with gamut errors.

Hardware elements that can convert successive pixel data variables between color spaces, test for a legal result, and substitute legal values when necessary, may need a relatively substantial data rate. US Pat. 5,737,032 - Stenzel et al., for example, teaches a substitution technique with lookup tables and clipping elements, that can be embodied in field programmable gate arrays.

The foregoing patents together demonstrate that it is possible to provide a system that can operate to provide a meaningful display enabling an operator to adjust levels of audio and video programming in real time, and at least in a robotic way to ensure that adjustments and color space conversions will not result in illegal gamut errors. Nevertheless, it would be advantageous if it could be possible to provide greater monitoring and adjustment capability, and to operate at an even higher rate. It would be advantageous to enable video signals to be tested and proven, with optional adjustments made partly robotically and partly with operator supervision, and to enable a program to be handled in less than its playing time, or to enable two or more programs to be handled at the same time.

Prior art video editing facilities generally are not useful at faster than real time because if playback is in a time compressed mode (fast forward), it is difficult or impossible for an operator not only to discern the need for adjustments but also to effect adjustments fast enough that adjustments do not seem to lag when the adjusted program is played back at nominal speed. A conventional video editing facility should be characterized by slow motion or possibly advancing in indexed fashion to display and process one freeze frame after another at a rate less than real time to enable the editor to focus more attention than would be possible in real time.

Nevertheless, it is possible as in the patents cited above to combine robotic corrections and manual adjustments. Another video pre-analysis station that reads video data from a computer terminal and enables operator adjustments from a monitor as well as automated corrections is US Pat. 5,469,188 - Krishnamurthy. An interactive editing apparatus with controllable time and space elongation (zooming) is disclosed in US Pat. 6,525,746 - Lau et al.

The teachings of the foregoing cited patents are hereby incorporated in this disclosure in their entireties.

It is an object of the invention to improve on known editing techniques in a variety of ways. One improvement is to allow processing of video programs at faster than a real time rate. As discussed above, it is necessary to enable an operator to discern the need for changes and to react by making adjustments at increased speed. This object is achieved in a system wherein the video programs are initially loaded as files and are processed by robotic analyzers that are operable selectively to access the video and audio data, decompressing and decoding the data as necessary, and to apply tests and transformation according to criteria that can be adjusted by the human operator. Adjustments in the data can be effected, and a log is generated that marks the time sequence for the program in a manner that allows the human operator to skip over some time spans and to pay attention specifically to those points in need of attention.

To further improve speed, the inventive system is networked. A plurality of analysis stations can be provided to process programs that are queued for processing and not simply queued for output such as broadcast or transmission. The analysis stations share the processing load.

A further object is to facilitate most or all of the specific processing steps that a human operator might find desirable, not only in a given program, but in a sequence of programs emanating from a production facility. Thus, the invention provides for adjustments to specifications similar to what might be provided by an operator attended proc amp. The invention provides legalization of audio and video sample values and sets of related values (e.g., pixel values in different color spaces). The adjustments and legalization specifics can themselves be selectively varied, for example to provide normalization of attributes from one program segment to another, including scene transitions, program transitions, interspersed commercial messages and other segments.

A further object is to provide an efficient client and server based system configuration whereby one or more operators, who may have different production and distribution functions, can handle a number of programs or segments in a coordinated and organized manner, even though the programs may be provided in different video program.formats, compressed or not compressed and requiring different Codecs to decode, process and optionally re-encode as adjusted, using the same or a different Codec.

These and other objects are accomplished by a set of processors and display terminals networked together in a system as disclosed and claimed herein, with at least one mass storage element, as a scalable array for carrying out concurrent analysis and processing of multiple programs or segments. The steps used in analyzing and processing the data values can be distributed among the processors. Some steps enable Interactive operator involvement with display of parameters on multi-format test displays coupled to the processors, review of parameters and monitoring of content.

A digital processor is provided in network arrangement for processing audio and video program data in encoded files that are ingested and processed to determine their conformance with variable test criteria and to amend the data automatically and/or under interactive user control. A high capacity storage medium or network supply media data that is ingested as a stream or in any of various coding and compression formats that are served. A scalable hierarchy of control, media analyst, and user interactive test and display processors share the processing load and attend to decoding, processing and re-encoding the segments in preparation for storage and distribution. The processing includes applying chroma, luma and level controls, normalizing successive segments to standards, forcing legal color variables, and also marking of segments and data changes for optional user review and control using a graphic interface. The interface can display the program, multiple user selected graphic displays, and tabular information including processing criteria and including the status of segments that are queued or in process or ready for distribution.

The analysis and processing is effected at a rate that can differ from actual program playback time, and in particular can be robotic processing for marking and/or automated value substitution for error correction or the like at a rate that is substantially faster than playback. Or the analysis and processing can occur at a discontinuous or slower rate to suit an operator's preference. The processing preferably includes a set of correction categories that can be selectively invoked, such as normalizing luminance and chroma (color phase) as in a processing amplifier, according to predetermined criteria at a rate that can differ from program playing time, e.g., being completed is less than the playing time, automatic data substitution according to specifications, forced error correction for color gamut and signal saturation issues, and other functions undertaken, for example to standardize program aspects, ease transitions and avoid audio and video processing errors.

According to the invention, an one or more media programs that can have different formats are received and stored or at least buffered, and decoded and decompressed as necessary to produce audio and video data to be analyzed. Data values are subjected to analysis for testing and optionally for substitution of adjusted values as necessary to meet programmed data criteria. The values to be tested and adjusted can be the amplitudes of sampled parameters, i.e., instantaneous levels of audio or video variables in a time or frequency domain. The values can involve functions derived from two or more concurrent variable values, and/or from values that are successive in time. Analysis and adjustment can be a robotic function according to default thresholds and other reference values, or can vary with the program data. Test and display monitor terminals enable interactive operator involvement, for example for monitoring and changing the process of data analysis and adjustment as the processing proceeds. Preferably, processing can be effected at a data rate that is faster than real time, that is, faster than the playing time of the media being processed. Slow motion, freeze frame and selected area processing can be selected at the convenience of the operator.

Plural media programs are processed in a faster-than real time arrangement, particularly using a scalable client and server data processing arrangement. The system can be employed for pass/fail testing, selective adjustment of audio and video parameters to obtain compliance with selected standards or to effect artistic choices. Programs can be rated or sorted as to their data specifications. Programs to be queued for use, distribution or display can be normalized for continuity, cleared of errors, rated as to possible distribution channels and otherwise prepared or vetted for use.

The drawings show certain embodiments of the invention that are discussed herein as examples. However the invention is not limited to these examples. Reference should be made to the appended claims to determine the scope of the invention. In the drawings,
Fig. 1 is a schematic diagram showing a media distribution arrangement according to the invention.
Fig. 2 is a block diagram showing the data flow between the processing elements in Fig. 1, as distinguished by different assignment of functions including storage, control, analysis/modification and use/distribution functions.
Fig. 3 is a block diagram showing the scalable nature of the invention at plural levels in the data processing hierarchy.
Fig. 4 is a more detailed block diagram corresponding in part to Fig. 1, and identifying preferred specific examples of source, analysis and distribution options.
Fig. 5 is a block diagram illustrating the structural and functional aspects of an exemplary media data analyst processor.
Fig. 6 is a work and data flow diagram showing application of the invention to a video production environment operable to produce an ongoing succession of segments.
Fig. 7 is an example of a graphical user interface containing a queue of programs segments in processing, a table of alarm settings that are potentially user variable, a program summary showing video and audio characteristics of the segments, and an alarm detail identifying times in a selected segment wherein conditions triggered an alarm.
Fig. 8 is an illustration of the graphical interface selectably arranged to present alarm information for one media segment, and also a multi-format test data presentation of audio and video program parameters. The test data presentation includes playback of the program image in one of the zones of the multi-format display area, and preferably is associated with an audio output unit likewise to present the audio portion of a selected segment or time portion thereof.
Fig. 9 shows a selectable window in the graphical interface as applied to a broadcast application, wherein segments identified by titles are listed by their status, certain of the segments being ready to air.
Fig. 10 shows a graphical interface window showing the status of programs in the process of analysis according to distinct selected profiles, i.e., audio/video parameter specifications.
Fig. 11 shows an interface window representing an alarm log showing the start time and duration of alarm generating events. According to an inventive aspect, the cause of the alarm generation events can be corrected to render the segment ready to air as shown, or the events can be used to direct human attention to portions of the segment where specifications might be customized.
Fig. 12 demonstrates a video processing amplifier window in the graphical interface, wherein a control tab is invoked, permitting changes in the respective gain and phase adjustment criteria.
Fig. 13 demonstrates a second tab in the video processing amplifier window showing start times (using an alarm code timeline instead of the segment time code) and duration of alarm conditions.
Fig. 14 shows a user control interface wherein the user is provided selection tabs for invoking audio specifications that can be applied to selected portions of the program segments.
Fig. 15 shows a user control interface comparable to Fig. 14 for certain video parameter selection, in particular permitting selection of specific legalization scenarios (forced correction of gamut errors that may occur in conversion to/from one of the encoding schemes shown) and permitting the application of forced corrections to pixel data values in a masked area of the image based on vertical line and horizontal pixel counts.
Fig. 16 shows a control interface for user adjustment of upper and lower legal chroma and luma values (generally expressed in mV or least significant bit pixel unit values), including clipping values that are enforced if illegal levels result from a conversion.
Fig. 17 is an example of a control presentation in the graphical interface (in this case being a proc amp) wherein virtual dials and status indicator blocks provide the look of a test device with adjustable knobs.

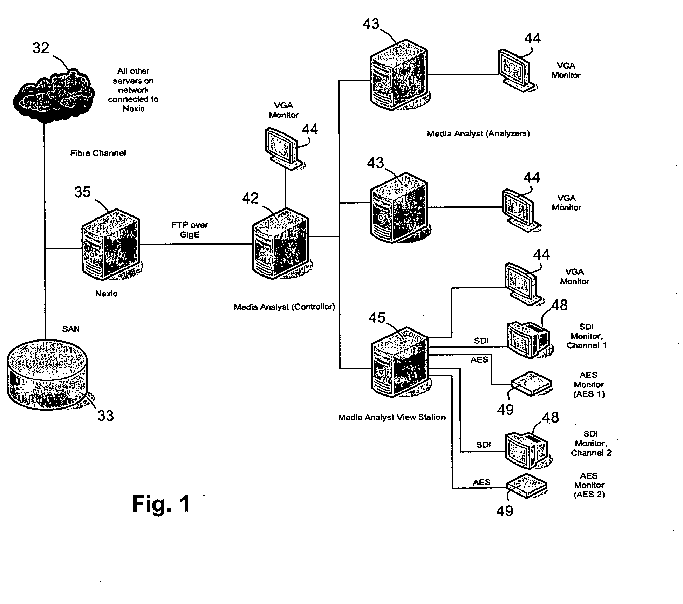

An exemplary embodiment of the invention shown in Fig. 1 employs a hierarchy of storage, server and applications elements for handling media segments. The invention has a variety of widely applicable features that can be used in applying predetermined specifications to media segments in various production scenarios. The media segments are made available by downloading from a network 32 via a high bandwidth connection or from a digital data store such as a high capacity storage area network 33 or the like.

The storage area network advantageously is part of a system having a video distribution server 35 such as a Harris - Leitch Technologies Nexio server, which manages the program segments stored on the storage area network 33 and passes the segments on request to an array of media analysis, test and viewing processors 42, 43, 45. These processors undertake tests on the audio and video data in the segments, which tests can be partly automated and partly under control of one or more human operators, as discussed in more detail below.

The processors 42, 43, 55 produce an amended version of a processed segment and/or a log file of metadata information. The amended version and/or the log file are used when the segment is passed along, e.g., when distributed or viewed. The log file can advantageously be embedded in a version of the segment that has been amended to comply with specifications that are applied when vetting the program segment for distribution or use. This version (and metadata) preferably are stored in the data store 33 and include or are indexed to data showing that the segment meets predetermined specifications. These specifications can be standard specifications or customized specifications that are stored with the segment or made available elsewhere.

It is possible to replace the media program data in the data store with an amended version that has been processed to meet specifications. Normally, however, the original version and the amended version are both retained and stored. One advantageous application of the invention is to prepare separate versions of an original segment that have been approved to meet specifications that may be different and more or less demanding, based on considerations such as the bandwidth of the data distribution path, whether the program is intended to be reproduced on high definition or standard definition output devices, etc. In that case, multiple amended versions of the original media data can be produced, each being processed in a customized way.

Referring again to Fig. 1, the video distribution server 35 is coupled over a packet data network with the media analysis, test and viewing processors 42, 43, 45, which are arranged partly as a hierarchy and partly so as to distribute among the processors 42, 43, 43 the respective functions of analyzing the media data, presenting the media data audibly and visually, and controlling operation. For this purpose, the processor 42 in Fig. 1 can be deemed the controller and is coupled in a communication network with one or more analyzing processors 43 and presentation or viewing processors 45. The communication network can be a subnet as suggested by Fig. 1 or the processors 42, 43, 45 can be peers on the same network as the distribution server 35.

The processors 42, 43, 45 in the hierarchy can be similar devices, based on a current Pentium or similar processor chip. The processor can be provided on a motherboard that preferably has available peripheral slots for certain hardware accelerated elements that differ between one or more processors 43 that are most devoted to analysis and one or more processors 45 that are most devoted to presentation. According to an inventive aspect, the necessary processing is handled in file based system using programmed processes carried out in one or more CPU chips. In order to provide capacity sufficient simultaneously to process several media segments, it is preferred to embody the processors 42, 43, 45 specifically for their functions. At least some of the same functions can be made available in each of the processor types.

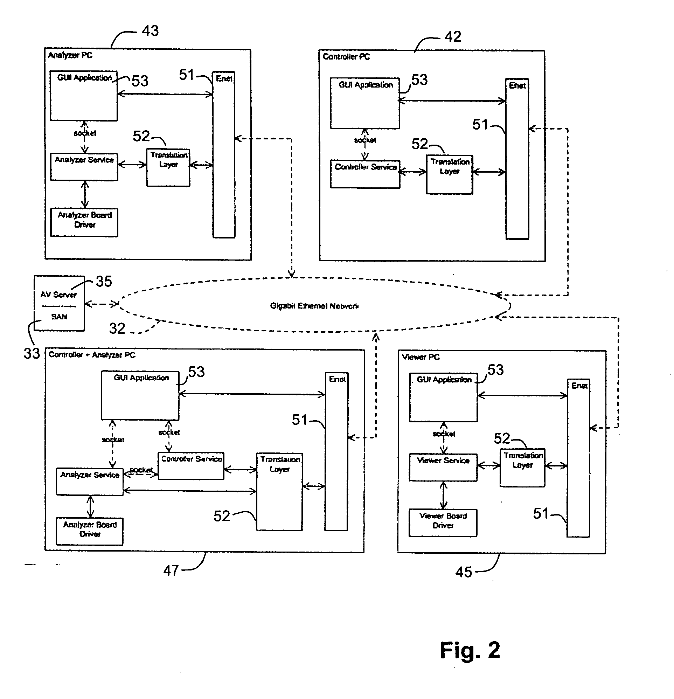

As shown in Fig. 2, each of the processors 42, 43, 45 has an Ethernet or similar network communication interface 51, a translation layer 52 wherein incoming media data is decoded to obtain a standardized representation of the audio and video content, support for a graphical user interface 53, and one or more functional elements for control, analyzing or viewing service. The block diagram in Fig. 2 illustrates analyzer, control and viewer service blocks, and separate circuit board blocks for analyzer and viewer board drivers. Fig. 2 also shows that it is possible to distribute these analysis, control and viewing functions in different specific sets, such as that embodied by processor 47, which includes the service blocks for both control and analysis.

The respective processor 42, 43, 45 (and 47) operate in a coordinated way. Thus the control processor 42 (and/or 47) can assign particular media segments successively to the analyzer processor 43 and to the viewer processor 45 such that the analyzer 42 can generate alarms that the viewer 45 presents to an operator for a resolution.

Preferably, the operation of processors 42, 43, 45 (and 47) is such that the a targeted media segment is decoded at the translation layer, processed in a manner that can be wholly or partly preset and robotic and wholly or partly governed by the human operator, and at some point is re-encoded into the same or a different encoded form in which the media segment is stored (for example back at mass data store 33) or is distributed (over network 32 or otherwise).

The translation layer 52 preferably recognizes the Codec that was previously used to encode any of the media segments that are compressed or encrypted or authorization-required media data, and decodes or decompresses the data to reproduce audio and video data samples. Alternatively, the translation layer could re-assemble streamed packet data to reproduce audio and video data samples. The decoded form may comprise, for example, component RGB or composite YCbCr samples, together with one or more time sampled audio channels and certain embedded supplemental data). Having passed the translation layer 52, the media segment data is made independent of vagaries of its coding. The data is then is a form where its values can be analyzed and amended if so required.

Amending of the data can be a matter of applying a predetermined numeric function, such as to apply to an audio signal automatic gain control, clipping, S-shaped functions, adjustment of average level over a given term of integration, changes to phase relationship among channels, frequency band adjustments, filtering to remove hum or hiss, etc. Video samples likewise can be conformed by clipping or other functions such as adjustments to luminance level, color saturation amplitude, and hue phase, particularly if a test pattern is briefly included in the samples as a reference.

In connection with legalizing the color gamut, certain color gamut errors arise due to the combined effect of two or more color variable levels that contribute to the calculation of a variable value in an alternate color space. The value of one of three color parameter values of a sample or pixel in one color space definition, may be derived algebraically from the values of two parameter values in another color space definition. For example, calculating any one of the R, G or B amplitude in a color component variable system is based on the value of two parameter values in an alternative color space, such as YCbCr in a composite color space. In converting between color spaces, a legal set of values for two parameters sometimes generates an illegal value in the other color space, i.e., a gamut error. This sort of error can also occur in converting from high definition to standard definition. According to one aspect of the invention, the analyzer can be set to detect a gamut error in connection with an identified conversion, or to predict an error should a conversion be made in the future, and to mark the media file to show the nature of the error and the time point where the error or potential error is encountered.

The system of the invention can be used to detect and respond to situations as well as parameter levels that are illegal because the amplitudes are out of range or the like. Thus, for example, the invention can be configured to detect when a change of aspect ratio occurs, e.g., a change from 3X4 to 9X16, letterbox to picture pedestal, etc., which might provide an opportunity to change the zoom or stretch of the presentation to take full advantage of screen display area. In an audio example, the application of Dolby processing or a particular Dolby mode may have been detectably switched in or out. Although these may not be classed as error conditions, they can be defined and treated as such to enable the quality and continuous nature of the media stream to conform to required characteristics.

According to one aspect of the invention, media segments in compressed or otherwise encoded files are decoded, analyzed for quality and can be amended to repair aspects that do not meet standards, and passed in their approved and potentially amended form for distribution. The invention also can be applied to approving a media stream as it proceeds, even if transmitted discontinuously as packet data or at a rate different from the rate at which the media segment would be presented to the ultimate viewer. Thus the invention provides an automated and organized technique for quality assurance of multiple media segments, without the need to play back the media segments at their base band playing speed for the purpose of such review. The invention substantially reduces the time needed to review and approve the media.

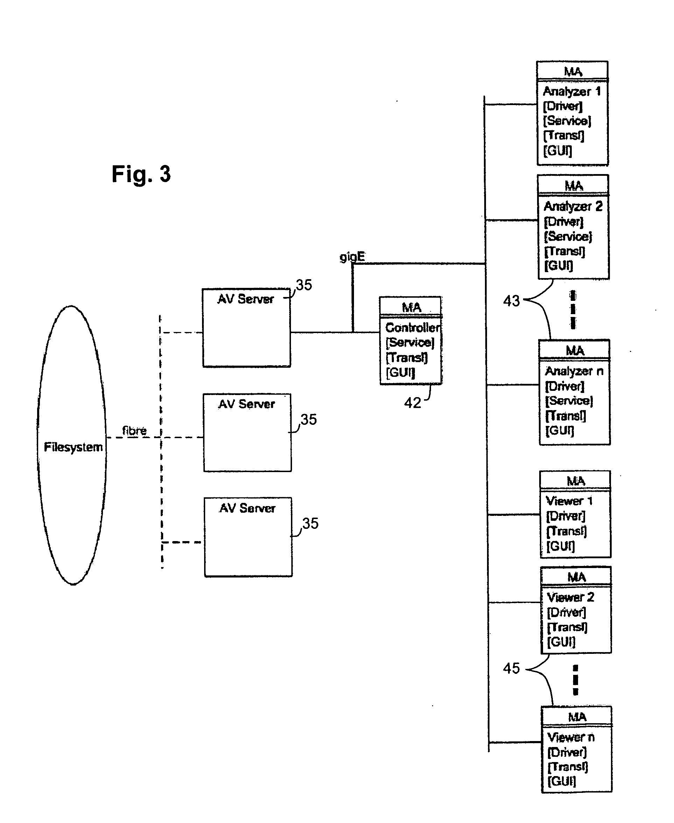

The invention relies, to an extent, on the idea of automatically and robotically converting media data into numeric sample data when passed through the processes that analyze and adjust the sample values. The values are thus converted to a form that might be capable of being read out at base band speed. However by relying on programmed processes, the analysis and processing of the samples can be accomplished much more quickly than playback speed. One analysis processor 43 operating a current processor chip can process full HD encoded media in about half the corresponding playing time of the media. This rate can be expected to improve with improvements in processors. At lower data rates, for example for SD, the analyzing process is even faster. Furthermore, the configuration is scalable at the level of the networked coupled analyst processors 43 and analysts processors 45 with parameter viewing capability, as shown in Fig. 1, or at the level of the media program server 35 as shown in Fig. 3, each of which servers 35 can be coupled to plural control, analyst and analyst/view processors.

The view and analyst/view processors 45 are useful as operator interactive tools enabling an operator to monitor operation of the more robotic analyst processors 43, and in particular to determine and to adjust the specifications that the analyst processors 43 apply to processing the audio and video parameter values through their predetermined processes.

The media segments can be more or less complex in terms of content and encoding scheme, for example being encoded for high definition or standard definition, optionally data compressed, in progressive or interleaved arrangement, etc. The media segments preferably each contain one or more audio channel tracks and an associated video program that is capable of playback over a predetermined period of time, when suitably decoded and processed. The segments alternatively can have multiple channels of audio, selectable plural pictures for insets and overlays, etc., these variations can render the content of the media segments more or less extensive. Given that the media segments are encoded and stored as digital data, the data and the manner of encoding can likewise be more or less complex, for example in a packetized format for streaming or in a data compressed file format such as MPEG coding based groups of pictures.

According to an inventive aspect, the capability of the storage and distribution network to handle a variety of encoding formats, such as the capability of the Nexio brand server, is employed to provide the data representing the media segments, in one or more selectable and standardized formats by which the media segments are submitted to a network of media analyst processors. The media analyst processors apply data processing steps, partly robotically and partly to carry out processes involving human intervention. Preferably, these processes apply an analyzing process to the data, to determine whether the data conform to predetermined criteria and the processes optionally also can force the data to conform by inserting modifications to the data and generating a processed version that either replaces the original program or is transmitted or used along with the original program. The human intervention processes comprise selecting and varying the criteria, making choices based on human judgment and similarly coping appropriately with the media program data.

One advantageous application of the invention is to use the media analyst processors to mark portions of the media segments with encoding that reflects compliance with criteria or alternatively to develop a time log to record which time intervals meet or don't meet particular criteria. A further application is selectively to present to an operator a presentation respecting specific intervals in the media segments that have been determined by the analysis to potentially require attention, efficiently skipping over other intervals.

The media analyzers can have a variety of test equipment functions to assist the operator in review of all or part of the media segments or intervals of media segments that are selected. Such test equipment can be, for example, according to the Harris - Videotek line of VTM and TVM test and measurement devices. These devices present oscilloscope displays such as vectorscope and composite amplitude versus time plots, graphic presentations of audio channel amplitude and phase relationships, gamut excursions and gamut errors and tabular data showing sample data values. The devices present the display by selectively populating the display memory of a display driver with data representing a VGA or SVGA (or generally "XGA") image field. Areas in the display field are selectively devoted to display of different forms of data, enabling the operator select simultaneous displays of concurrently active variable values. The areas in the display also can be switched by automatic control, for example to display data in a specific area of the picture wherein a gamut error or other condition is has occurred. The areas can be switched under operator manual control to display data respecting a selected portion of the image that the operator may highlight for scrutiny, using a mouse of other control to select the image portion or to areas representing one or more of the picture and any of several alternative test displays.

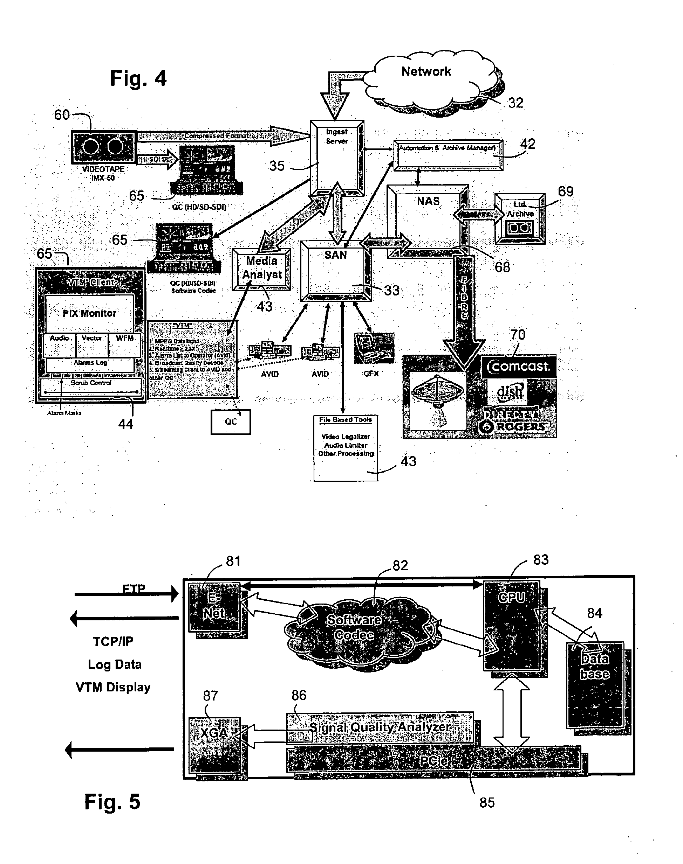

Fig. 4 demonstrates certain applications of the system to particular workflow tasks associated with accepting, approving and transmitting media segments. In addition to accepting input over a network 32 as discussed, the Nexio or other ingesting server 35 can include other data input devices such as a reader for a recorded video program 60 from a tape, compact optical disk (CD) or the like. At such an input point, the media can be monitored if desired using a VTM test and measurement monitor 65. In any event, one or more versions of the incoming program are stored by the ingest server 35, preferably in a network coupled storage area network (SAN) 33. Particular media segments can be passed to another test and measurement monitor station 65 by the ingest server 35, or passed to the media analyst controller 42 or directly to one or another of the media analysis processors 43.

As stored, the program versions are available to be processed as required. Certain programs may be received with assurances that certain specifications are met, and those programs might be made available at once or passed to an archive storage area 68 or long term archiving process 69 in which programs might be stored in another storage medium or offline. However the media analyst controller 42 can manage automation and archiving functions. The automation includes designating media segments for processing by analysis processors 43.

Certain of the media analysis processors have viewing capabilities as shown in Fig. 1, for exampling including an SDI video monitor 48, an AES audio playback unit 49, etc. (not shown in Fig. 4). Certain of the media analysis processors also include data display devices such as VGA monitors 43. These monitors 43 are used as test and measurement displays. In Fig. 4, one of these monitors is associated with a VTM client 65 is shown in a block diagram form.

In a preferred embodiment, each of the VTM clients 65 is configured to enable input in compressed data form (e.g., MPEG) or as a packet data stream or as time division samples. The device preferably can decompress, process at full broadcast quality and/or resolution and output the data at a rate ranging from slow motion to real time to fast motion, e.g., at 2.5 times playing speed or better. Among other forms of output is a display of the program image as mapped onto a portion of the VGA display area. As a programmed processor function or as a hardware accelerated function, the VTM terminal analyzes the data for compliance with threshold levels, averages, video picture shape characteristics such as aspect ratio and otherwise checks the program in an ongoing and potentially changeable manner, against predetermined specifications.

The predetermined specifications preferably can be selected to default levels, such as industry standard amplitudes and numeric values for luminance, chroma, audio amplitudes, etc. The specifications in video data can include analysis for actual or anticipated gamut errors in the video data. An actual gamut error can occur, for example, when a threshold is exceeded when decoding RGB color components from a composite sampled input data stream. An anticipated gamut error can occur when a combination of values in component or composite values is encountered that would algebraically produce a gamut error should it be decoded by another processor or device downstream along the signal distribution path.

According to an inventive aspect, at least certain of the analysis processors 43 operate by processing a data file and therefore are not inherently limited to any operational speed. Using file based data processing tools, namely programmed routines, processors 43 algebraically process and compare values. The processors 43 are programmed to legalize the video data, limit the audio values by clipping, automatic gain adjustment, filtering to remove hiss or tones, and otherwise to process the data in a generally robotic and automatic way. The processors also can include hardware accelerated boards or co-processors to handle some tasks via registers and gating.

The output from the analysis processors 43 can comprise a revised data file wherein the media program parameters have been adjusted in value according to programmed operation. Alternatively or in addition, the processors 43 can produce a stream of alarms and markers, associated with particular times or frames in the media segment, which log and record the fact that an alarm condition was met or that an amendment to the data has been effected to ameliorate an alarm condition. In that case, a human operator can interactively review the same media segment using a media analyst 43 or 45 that includes a VTM client 65 and data monitor device 44. In this way the operator can quickly find, review and potentially revise the changes that are made by the more robotic analyzer 43 that operates high speed file based tools.

Having processed the data, the respective analysis processors 43, 45 can output one or more revised versions (e.g., the original and one or more additional versions that have been amended to comply with predetermined specifications). The form of the output can be a data stream, for example for transmission to an AVID unit, a set of patterns, backgrounds or the like to be used in a graphic processor GFX, or a re-encoded file version of the media, using the same Codec the was used originally or one or more different Codecs, for example that are standard Codecs used for further processing in the video distribution system. The program segments may be stored for a time on a storage area network coupled to the Nexio server, individually or in associated sets of segments that can be read out sequentially. Preferably, the media segments as now processed, vetted for specifications and made into a form palatable to the remainder of devices on system 70, such as a cable or satellite network, are stored in a network accessible storage device 68 from which the media segments are read out and used.

The analysis servers 43, 45, and the control processor 42, can be based on standard personal computer motherboards and processor chips. As shown in Fig. 5, an exemplary processor 43 comprises an Ethernet or similar network access circuit 81 in communication with the processor chip CPU 83 that in turn is in data communication with a memory including programming such as one or more software Codecs for decompressing and decoding incoming files and recompressing and re-encoding them for output if necessary. The memory also includes programming for operating the legalizing and other processing steps, using factors that are stored in a database 84. The database values are accessible via a graphical user interface, discussed below, enabling the controller processor 42 or an operator via an interactive process accessed via one of the processors 42, 43, 45, to enable or disable aspects of the approval and amendment processes, to change thresholds and other factors and similarly to set up the processes that thereafter operate with little or no user control.

The processor 43 shown in Fig. 5 has an exemplary hardware accelerator in the form of a signal quality analyzer 86 that is provided in a PCI slot 85. This analyzer 86 can include dedicated hardware devices for certain analysis and filtration steps that may be handled conveniently and at an operational speed that is appropriate to certain functions, for example involving digital and analog conversions, re-sampling or similar steps.

The processor 43 includes an XGA display driver 87 that includes or has access to a pixel data memory whereby the VGA or similar monitors 44 are fed pixel data so that the contents of the various VTM displays mentioned above are inserted into selected areas of the visual display at a given monitor 44. The contents include the picture image, the various familiar graphic displays of information about the picture such as a vectorscope graph, a composite amplitude versus time display, tabular information such as the sample values associated with one or a number of pixels in the image, etc.

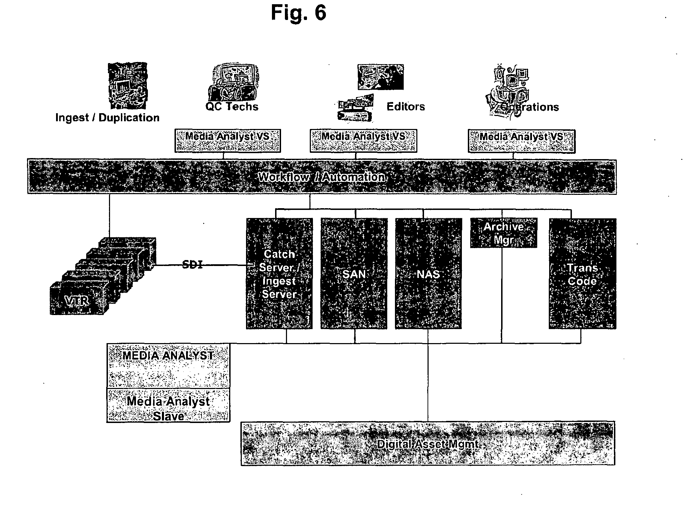

Fig. 6 demonstrates additional workflow aspects according to the invention. In an operation for distribution of media segments, there are a number of workers, and jobs to be served. The invention allows efficient access to the media content by various workers for meeting the requirements of their function. An input technician 91 manages loading of the media to the system via ingest server 35. The storage area network 33 and the network accessible storage unit 68 hold the versions as they are processed and approved. This process is partly robotic using the media analyst control processor(s) 42 and slave processor(s) 43, and is overseen, monitored and tweaked by QC technicians 93 and editors 95 using the interactive media analyst processors 45, which have displays, readouts and media segment amendment capabilities of VTM client 65. At the downstream output end along the signal distribution path, operations staff 97 likewise can invoke VTM client processes in connection with switching, mixing and program queue functions. These functions are all conveniently managed and controlled by the respective staff members from their individual network-coupled work stations.

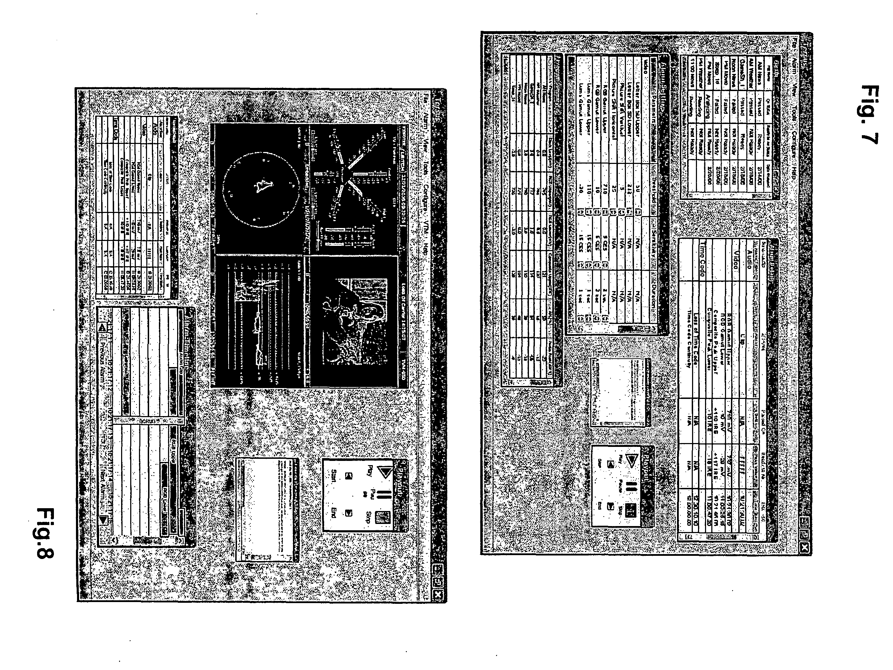

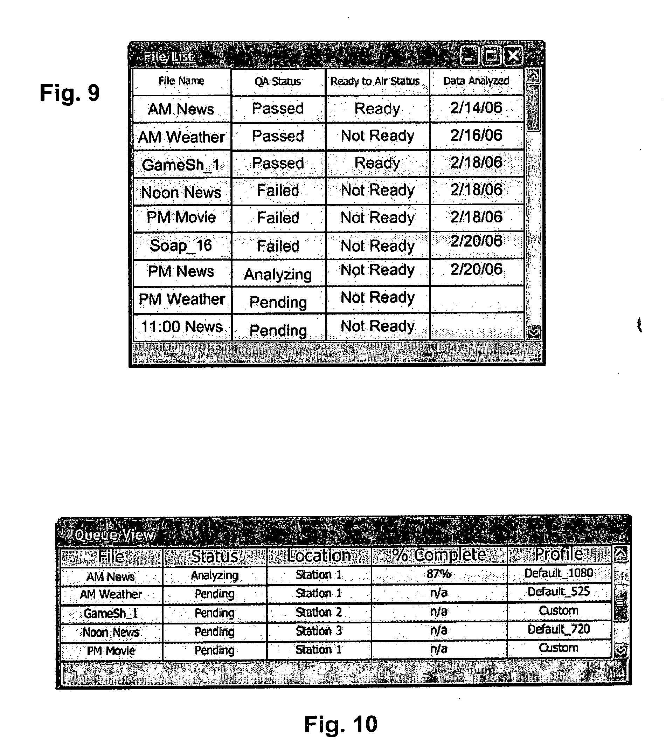

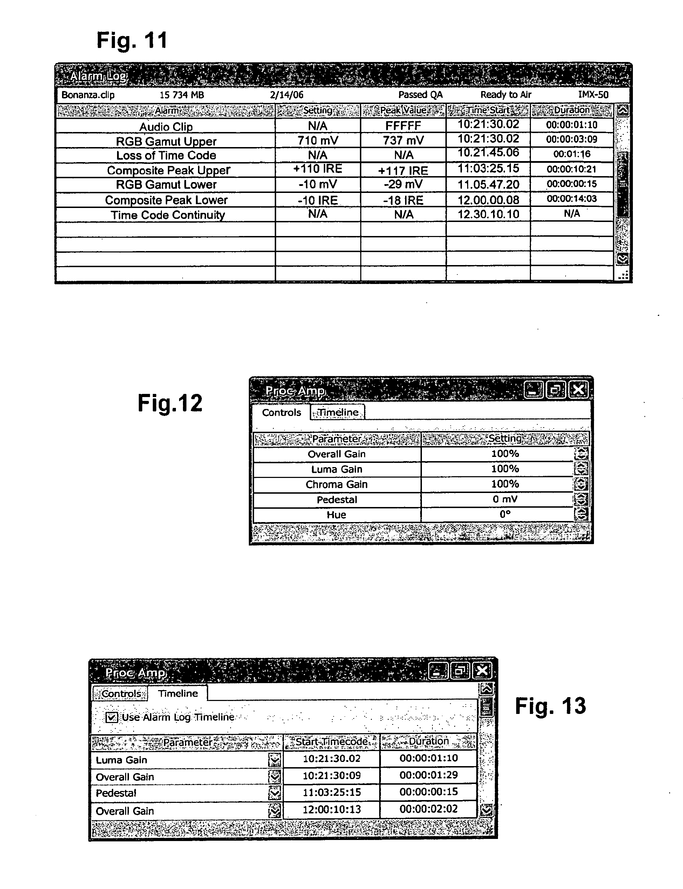

Figs. 7-13 demonstrate exemplary displays that are provided by the graphical user interfaces associated with the respective processors, including the media analyst controller 42, analyst 43 and analyst/view station 45. In Fig. 7, a set of windows are open in the display showing a work-in-progress display window (also shown in Fig. 9), an alarm settings window in which the operator can view alarm thresholds, sensitivity settings and duration required to generate an alarm, an alarm detail window comparing parameter levels from alarms with currently set thresholds (see also the Alarm Log window in Fig. 11, which shows alarm settings, last peak, time of peak and alarm). Fig. 10 shows a queue view wherein a profile field demonstrates that the media segments can be subjected to different sets of predetermined alarm and processing parameters, of which some are default parameters associated with desired industry standard outputs and others are customized.

Fig. 8 provides a display screen wherein the VTM client 65 has been invoked to provide a test display with several display areas. In this embodiment, the graphic displays (clockwise from upper left) include a graphic presentation of audio levels and phase for surround sound audio tracks, a representation of the media program video image, mapped to fit into a window quadrant, a graph of composite amplitude versus time, and a vectorscope polar plot of saturation versus chroma phase angle. Fig. 8 also includes a play-out control window in which the operator can point-and-click controls by which the operator can start, pause, play, stop and similarly control the progress of media segment display and/or processing.

Figs. 12 and 13 similarly demonstrate video processing amp settings. In Fig. 12, the "controls" settings are arranged to adjust a gain applied to chroma and/or luma video parameters, or to insert an offset in pedestal level or hue phase angle. In Fig. 13, the controls applied in the controls setting are applied only for a predetermined duration, whereupon the gain or offset can be changed. All the particular processing values applied in this way are stored in the database memory of the analyzer processor during use, and embedded in metadata that is carried forward with the media data for future reference and optionally for subsequent readjustment.

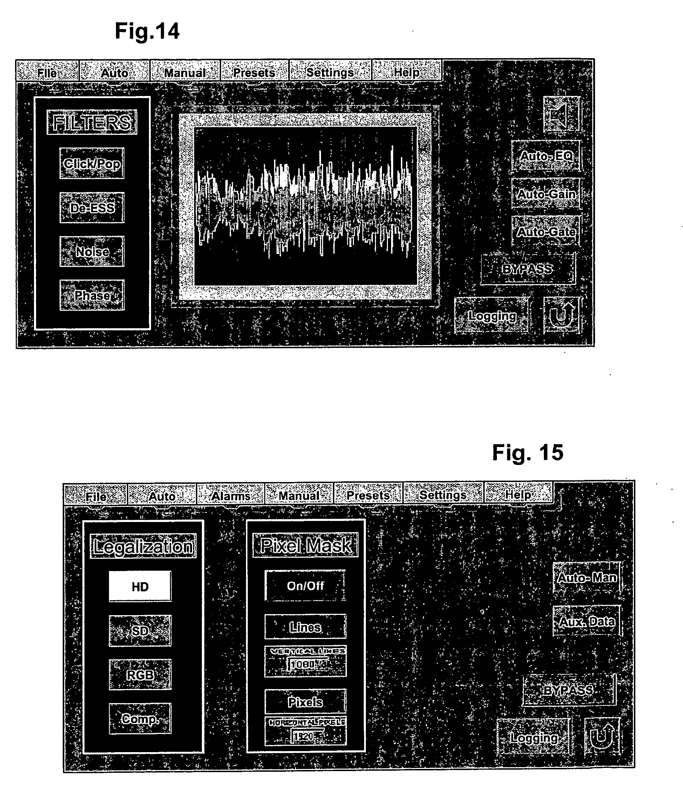

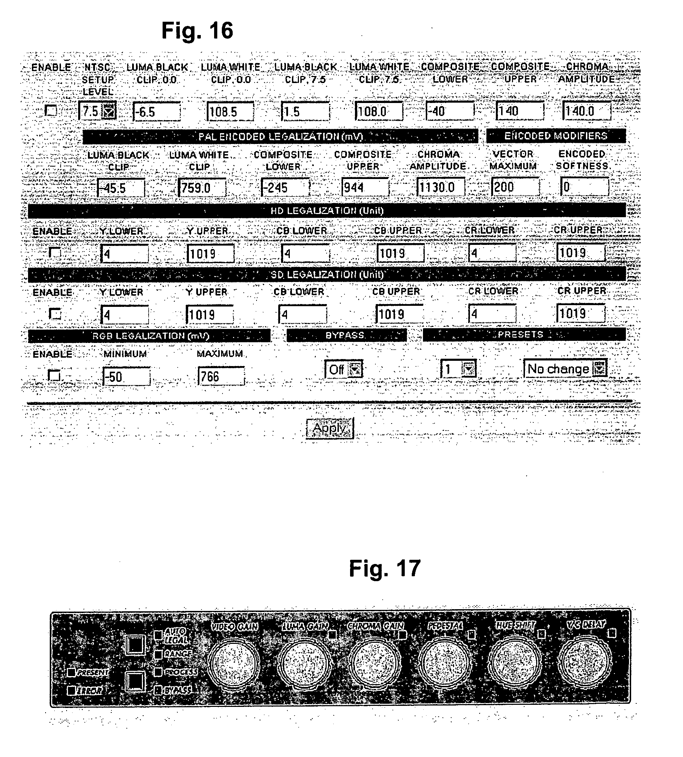

Figs. 14 and 15 show additional controls that are provided in the graphical user interface and in this case can be associated with the controller analyst processor 42, the slave processors 43 and/or the analyze/view processors 45. In Fig. 14, automatic filters can be enabled to filter unwanted content such as hiss or pop. A constant tone can be detected, inserted or removed. Phase and noise filters can be enabled or disabled. Various gain related criteria such as clipping, S-shaped filters, average level can be amended at required times with the changes being logged. Frequency response filters can be invoked to alter power distribution versus wavelength.

Similarly in Fig. 15, different sorts of parameter value legalizations can be applied to amend to correct gamut errors or to anticipate them. Also, the legalization filters can be applied specifically to a masked set of pixels or horizontal lines, again with the capability to alarm and/or to amend and to log changes that are shown in embedded metadata.

A number of the displays include buttons for selection of settings and presents. Fig. 16 shows an example of an graphic interface in which the operator can enter numeric values, enable and disable functions with click boxes, selectively bump levels or select among predetermined options in a numeric manner.

Fig. 17 on the other hand demonstrates that the operator interface to the digital processors of the invention also can resemble familiar dial controls that are adjusted by the user via a keyboard, mouse or other input device.

In a preferred embodiment, the system of the invention can accept and process media data in various formats and can produce outputs in various formats, thus being suitable for application in a variety of systems that possibly have different and possibly proprietary encoding and data handling formats. Thus the invention is applicable on either the input or output side to ingestion or reproduction using compressed file media according to different compression and Codec requirements (e.g., MPG, WMV, AVI, etc.), including changes from on format to another. The invention is not limited to file based applications and also can handle media streaming. Changes to the media formatting, like changes made to amend parameter values during processing of the media, can be handled automatically or under user control and are preferably logged in embedded metadata for further reference.

The invention can be applied to making corrections that improve compliance of the media with specifications, such as clipping to avoid saturation and the like. Alternatively or in addition, the invention embeds data that records the results of analysis for the benefit of future reviewers. This benefit of the invention reduces duplication of action. The invention in general provides for an organized allotment of processing steps wherein robotic steps can be set up and run while steps requiring judgment are supported by providing test and measurement capabilities, easy access to parameter measurements and program image presentation (in a full screen or remapped window area) and generally reduces the overall workload associated with receiving, reviewing, approving and distributing media segments.

In the preferred embodiment, the parameter level alarm conditions and the processes for responding to alarms (e.g., whether to amend the data in one way or another) can be set by operator control so as to be changed during the progress of the media segment. The controls can be turned on and off, adjusted in gain, etc. for a particular time start and duration and/or for pixels in a masked area. This aspect applies even though the media data can be processed as files rather than encoded over time. Thus the invention can handle grouped picture compression encoding schemes or streams.

The elements of the invention, such as the media analysis processors, can be incorporated in other types of media segment processes. However the invention is particularly useful in a system where a robotic preferably file-based processor is provided for use in conjunction with an operator-interfaced playback-based processor. The operator interface processor has the capability to move quickly to time and/or pixel masked portions that require attention and are previously identified by metadata or other markings inserted by the robotic processor. This reduces the man hours required of human operators to review and approve a given amount of media programming time, reduces the level of expertise required of operators, and generally improves the consistent quality of media data while taking advantage of processes that can partly be set up and allowed to run automatically thereafter.

Inasmuch as the system is network based in a manner similar to a video distribution system, the throughput of the quality control aspects can be scaled upwardly by adding processors, subject to the data rate of network communications. In the file based embodiment, the network communication load is limited by the fact that the network communications can involve compressed media files that are decoded and decompressed within the analysis processor, thus reducing the required network bandwidth as compared to a similar system that relies only on communications of decoded/decompressed data at playback speed.

The invention is capable of embodiment in various ways. An exemplary embodiment is based on a Harris Corporation (Melbourne, FL) - Leitch Nexio media segment server, a hierarchy of file based media segment analysis processors having a suite of software Codecs such as are available from MainConcept, LLC (Pleasonton, CA), and programmed legalizer software operable to apply numeric tests and to revise or mark the data values, and wherein at least one of the segment analysis processors also incorporates Harris -Videotek VTM test equipment and legalizer technology.

The system and the associated methods are effective to verify the properties of video and audio files present via an ingest server 35 or otherwise made available, preferably by storage on an SAN/NAS network accessible storage system 33 (and/or 68). The inventive system and process checks the video and audio content of a program file or stream, in both automatic and adaptive ways.

Advantageously, the system is associated with a video production or distribution operation. Although described with reference to the Harris - Leitch Nexio server and Harris - Videotek line of test/measurement products, the invention also can be applied as an added functionality on other program handling systems and can use other specific devices for program data display and process steps including legalization and proc amp processing.

The Media File Analyst will verify and analyze the video and audio quality of multi-media files stored on a common video file server and server network. It will have tools with which video and audio can be adjusted and legalized. It will interface with server control protocols. It will maintain a list of files on the network that have been or need to be analyzed, and update the status of these files as appropriate. It will embed this status in the file- i.e. needs QA, passed QA, failed QA, etc.

Physically, the system comprises at least two frame type analyzer processes and preferably uses distinct relatively automatic type of processor 43 and an interactive type of process/view station 45. Of course, the automatic process also can run unattended on one of the processors of a system that comprises only the process/view station type 45. More than one processor 42, 43, 45 preferably can operate on a file or on segments of a file at a time, which renders the arrangement scalable and boosts analysis speeds. This is readily accomplished by employing a controller 42 to allot processing jobs to other processors 43, 45 or simply by employing file-open protections against overwriting the output of one processor with the output of another.

The capability to view either the program image or a test and measurement presentation via a VTM unit 65 can be provide on certain of the processing stations or on all of them, by providing suitable digital display panels 44 and signal generation via an XGA display generator or the like. The processors coupled to display panels 44 can be provided with the capability to view both the analysis results and presentations of uncompressed video/audio outputs of files that are generated by first decoding the media data with suitable software Codecs.

Standard data formats and standard generic interfaces and protocols are preferably used where possible, to render the invention widely applicable. For this purpose, Ethernet network access circuits are used in the example, and standard file transfer protocols such as FTP for file transfer or RTP for streaming can be employed.

The features supported by the ingest controller 35 and/or a controller 42 associated with a hierarchy of analysis processors 42, 43, 45 include the capability to automatically detect and verify a newly ingested or newly changed (edited) file. One or more operators uses the graphical user interface to manipulate the settings of the signal quality filters (which preferably are embodied wholly or partly in software processes and/or hardware accelerated digital circuits).

The settings comprises specifications that determine alarm thresholds, used to characterize the range of acceptable signal quality. When a signal exceeds the user threshold setting, an alarm condition triggers logging of the type of signal fault, the frame number or other applicable time code where the signal fault occurred, the duration (or at least start and end time) of the fault, and the peak value of the signal parameter that generates the alarm during the alarm period (RPV).

In a commercial embodiment, the processors comprise IBM compatible PC units, i.e., motherboards with a processor chip and memory for operations and programming (Fig. 5). The product supports the same sort of software Codecs currently used in Nexio servers, available from MainConcept, LLC. Hardware accelerated analysis can be performed on PCI modules mounted in available motherboard card slots. Other standard motherboard hardware and PC software features are exploited such as the Ethernet network interface, an XGA display output, and standard software features such as browser based software displays, FTP file transfers, etc., are used where possible.

In addition to analyzing the media segment content for compliance with specifications, the programming can include file based tools used to repair video and audio aberrations detected by the signal analysis, e.g., video legalizers, proc amps, and audio limiters, etc. or simply to revise the program data to comport with an alternative specification, e.g., for a different bandwidth program distribution path.

According to one basic analysis/correction process, the server 35 or the media analyst processors 42, 43, 45 determine that a media program file has been added or altered. The Nexio protocol can be used to signal or activate a process in the media analyst processors, specifying a file name or path, etc. The associated file or a copy of the file is transferred using Ethernet FTP or SAN (indirectly for a SAN-fiber channel between the SAN and Nexio, and then FTP between Nexio and Media Analyst), according to the physical connections available in the server network. The ingest server file manager processes can identify files as needing content quality assurance, for example, because associated information found (or not found) in a header or elsewhere shows that desired quality assurance steps have not yet occurred. In that event, the media analyst management software copies or moves the file from the SAN for evaluation.

In a preferred embodiment, there are plural processors operating for actually effecting analysis and amendment of parameter values, one of the processors having the function of controlling others, including scheduling files or file segments for analysis. The control function may be the sole function of one of the processors 42, or one function of a processor 43, 45 that also effects all or part of the analysis, or a distributed function of a group of cooperating peer processors 43, 45.

In the example the Codec for decompressing or decoding the media file may be associated with the Nexio server 35. Alternatively, the media analyst processors 42, 43, 45 can decode or decompress a media file that is received from storage in a compressed or encoded state. In any case, the media analysts undertake signal quality verification. As already discussed the verification can be similar to the real time verification processes that are used in legalizers that operate on base band signals during recording or playback, such as the Harris - Videotek's SQM system. However the invention operates by decompressing to base band, processing and preferably re-encoding the data in the same or different format of compressed video and/or pulse code modulated (PCM) audio media program files.

Assuming that the media content in the file is altered (as opposed simply inserting metadata to report the results of analysis), a local copy of the file is created. A database 84 preferably is maintained by the media analyst processor (42, 43, 45) during processing is updated to reflect all alarms and status changes, cross referenced to the program or file name, a log of signal quality data including the parameter settings that were active at the time of analysis (which settings are changeable as discussed), measurement of signal parameters exceeding enabled settings during the alarm period, measurement of the maximum and minimum signal excursions if not exceeding enabled settings (video positive and negative peak; APL, audio peak level, per file), and the time code that the signal sample value exceeded enabled settings.

A report is generated detailing the alarms detected during testing, the time code at which they occurred (possibly represented by a frame number), the alarm set-up parameters, and other information. The media analysis process generates a log that describes, preferably in text form, any and all portions of the media program file that deviated from the active user's settings, i.e., alarm conditions.

A client GUI, such as a time graph that can be invoked on the test/measurement display output 44 can include a scrub control time line and alarm marks representing the presence of errors (see Fig. 4) and placed according to program time-code. When operating according to a user interactive analysis process over the media analyst/view station 45, the scrub control enables the operator to move the display and analysis directly from one error to the next. This saves the user from the need to wait while the media program plays between detected error times, and provides substantial efficiency in the interactive mode.

The view client display can selective present the picture, waveform, chroma vector, and audio attributes of the signal at the selected mark, similar to the Harris -Videotek VTM and TVM lines of formatted display devices, mapped out and presented on distinct areas of a VGA or similar computer type monitor.

A report of the results of analysis is embedded in the file itself as metadata. Also, flags are set in the file header or other information is added, indicating the QA status (passed, failed, ready to air, etc.). Among other reports made available to the users is the file list report (Fig. 9) and queue report (Fig. 10) in which the progress of files through the system can be seen and monitored.

In a preferred embodiment, the analyst processors are physically separate units, but it should be appreciated that the distribution of functions among the devices is not inherently necessary. In addition to the signal quality verification using one or more of the processors 43, one or more of the processors 45 produces a viewer client capable of displaying video and audio signals. The display can be provided as a selectable screen in a GUI, similar to the multi-formatted displays of Harris - Videotek VTM products. This display is presented on the "VGA" output of the host PC and is produced by populating pixel data in a display memory. Multiple view clients can be operated simultaneously, for example to show different selected parameter plots and one or more media images in selected playback or special function modes (e.g., freeze frame, slow motion, regular speed, fast forward, rewind, scrub mode jumps to next marker, etc.) and a timeline can be displayed in the playout controls. View clients preferably can output up to two uncompressed serial digital video and audio streams, and among other things, this function can be used for side by side comparisons. Up to nine view stations can be used simultaneously in a preferred arrangement. The view stations are CCS level 1 compliant.

In a practical embodiment, the view stations functions comprise accessing a list of analyzed files, transfer of desired files to the view station, retrieval and display of an analysis report (from the analyzing media analyst database or as extracted directly from file metadata, playout in real time or otherwise (e.g., scrub-mode advanced directly to points of interest such as alarms, changes to video or audio content, or user-annotated points) and generation and display of VTM-like waveform, vector, gamut, audio, picture displays that concern the point in time that is under consideration or is integrated over a selected time period.

File analysis via the automated analyst processors 43 is preferably automatic in that all files pass through this part of the process. The process also can be invoked manually. File view/analyst processors can be served automatically with the next unreviewed media program is desired, or the operator can have the capability to decide what segments are to be reviewed and in what order. In this way, the system can be applied to operations that are more dependent on human intervention or processes wherein human intervention is used only rarely, for example to set up a new specification that can be selected and applied automatically thereafter.

Several of the media analyst graphic user interface screens are shown in the drawings and have already been discussed. Among the various screen available at the main or control media analyst processor, and optionally at any of the media analyst processors are window for File List, Queue View, Alarm Log, Alarm Settings Interface, Program Summary Report, Playout Control (described under View Station), and User Comments. These titles should be self explanatory in light of the examples already mentioned.

The menu bar for this display (selectable in a top level as opposed to the sub-panes) has click tabs, radio buttons, check boxes, or click-on-text options to select File, select "automatic" or "manual" file analysis, Analyze file selected from list of files available in File List pane or optionally default to the next file, set "Ready-to-Air" rules, set alarm limits (general for file or for current time hence), Purge results and reset, Print window (such as Alarm Log, File List, etc. preferably to print all the information contained in that window, not just that currently visible), Export file list and / or file-specific alarm and setting information to a text file

Under an Alarm grouping are Change default settings for each profile, Change settings for a single file (from list of files available in File List pane). Under a View grouping are selections to display File List, Alarm Log, Program Summary Report, Alarm Settings. The Tools grouping selects Video Legalization, Audio Legalization, Proc Amp. The Configure grouping selects Set video server IP address, View number of Analyzers & View Stations, Name Analyzers & View Stations, Audio- PCM or Dolby (if option is installed). The interface can have a general or context specific Help selection. In general, the graphical interface screens each employ familiar mouse conventions, such as left-click selection, right-click information, scroll wheel to scroll selections and the like.

## Claims

1. A system for processing media programs, comprising:
a data input storage medium for storing data files containing program segments, wherein the program segments include at least one of audio data and video data, encoded over a nominal playback time;
at least one processor in data communication with the data storage medium, wherein the processor is programmed to ingest and process selected ones of said program segments during a processing time that can differ from the nominal playback time for respective ones of the segments, and wherein the processor is programmed for selectively carrying on at least one of:
- decoding the segments from an encoded format to recover at least one of the audio and video data,
- analyzing the segments to determine conformance of at least one of the audio and video data with test criteria,
- generating a test information display for one of displaying the at least one of audio and video data, and indicating said conformance,
- marking portions of the segments so as to distinguish said portions for later reference according to predetermined criteria;
- altering portions of the segments to conform to a predetermined specification,
- embedding a metadata information log into the segments,
- re-encoding the segments in a processed form,
- providing a status report for distinguishing at least ones of the segments that are queued for processing and finished processing,
- storing said segments as processed, and
- transmitting said segments.

2. The system according to claim 1, wherein the at least one processor comprises a hierarchy including a controlling processor and at least one slave processor, wherein the controlling processor is programmed for signaling the slave processor to process at least one of selected ones of the segments and selected steps in processing of the segments.

3. The system of according to claim 2, wherein the hierarchy is scalable to include a plurality of slave processors that process said segments concurrently with one another in time.

4. The system according to claim 1, wherein the multiple segments represent a succession of distinct programs, and further comprising a program distribution server coupled to the data storage medium, and wherein the program distribution server is configured to offer respective ones of the programs for distribution after said segments associated with the programs are processed.

5. The system according to claim 4, wherein the programs are offered for distribution with said metadata inserted for identifying at least one of a result of analysis of segments of the program for said conformance, and an indication of changes made to the segments that are altered to conform to the specification.

6. The system according to claim 5, wherein the metadata comprises information that identifies aspects of the specification applied the segments, and time information identifying an applicable time of said aspects and an applicable time of alarms generated for lack of conformance to the specification.

7. The system of claim 1, wherein the segments as ingested include input data files in at least two distinct formats, and the processor is programmed to invoke appropriate decoders to convert the input data files to at least one common format wherein a portion of the audio and video data is processed.

8. A method for quality assurance of media programs, comprising the steps of:
ingesting a plurality of media programs into a storage medium in a form of one of files and data streams containing segments comprising at least one of audio data and video data;
coupling a programmed analysis processor in data communication with the storage medium, and recovering at least one of the audio and video data;
establishing predetermined specifications for the analysis processor, applicable to said at least one of the audio and video data;
analyzing the segments at least party by operation of the analysis processor to determine conformance of the at least one of the audio and video data with the specifications;
entering results of said analyzing into the segments by at least one of generating test information indicating said conformance, altering the at least one of the audio and video data to establish said conformance, and marking portions of the segments so as to distinguish said portions for later reference according to predetermined criteria;
re-encoding the segments in a processed form, and
making the segments in the processed form available for use.

9. The method of claim 8, wherein at least some of the media programs are encoded in a compressed form, respective ones of the media programs are encoded using different Codecs, and further comprising decoding said media programs into a standard format for said analysis.

10. The method of claim 8, wherein the analysis processor is operated substantially according to programmed criteria, and further comprising making available the media programs on at least one additional analysis processor having an operator interface wherein parameter values of the media programs are displayed as test and measurement outputs.
